# FASCICULE DE BREVET EUROPEEN

(11) **EP 2 915 235 B1**
(45) Date de publication et mention de la délivrance du brevet: **25.12.2019**
(21) Numéro de dépôt: 13801621.7
(22) Date de dépôt: 29.10.2013
(51) Int. Cl.: B60L 7/14

(54) **SYSTÈME D'ALIMENTATION ÉLECTRIQUE A DOUBLE STOCKEURS D'ÉNERGIE ÉLECTRIQUE D'UN VÉHICULE AUTOMOBILE OU HYBRIDE**
STROMVERSORGUNGSSYSTEM MIT ZWEI ENERGIESPEICHERVORRICHTUNGEN FÜR EIN KRAFTFAHRZEUG ODER EIN HYBRIDFAHRZEUG
POWER SUPPLY SYSTEM HAVING TWO POWER STORAGE DEVICES, FOR A MOTOR VEHICLE OR FOR A HYBRID VEHICLE

(30) Priorité: 31.10.2012 FR 1260406
(43) Date de publication de la demande: 09.09.2015
(73) Titulaire: Valeo Equipements Electriques Moteur, 94046 Créteil Cedex (FR)
(72) Inventeur: CHEMIN, Michaël, F-51700 Festigny (FR); BAUDESSON, Philippe, F-95490 Vaureal (FR)
(74) Mandataire: Cardon, Nicolas
(86) Numéro de dépôt international: PCT/FR2013/052586
(87) Numéro de publication internationale: WO 2014/068244

(56) Documents cités:
- EP-A1- 2 244 368
- WO-A1-2010/082275
- US-A1- 2010 133 900
- US-B1- 6 198 645

## Description

### DOMAINE TECHNIQUE DE L'INVENTION.

La présente invention concerne un système d'alimentation électrique à double stockeurs d'énergie électrique d'un véhicule automobile électrique ou hybride.

### ARRIERE PLAN TECHNOLOGIQUE DE L'INVENTION.

Les véhicules automobiles à moteur thermique comportent classiquement un réseau électrique de bord comprenant une batterie, généralement de 12 V, destiné à alimenter en énergie électrique les divers équipements, notamment un démarreur, indispensable pour assurer le démarrage du moteur thermique. Après le démarrage, un alternateur accouplé au moteur thermique assure la charge de la batterie.

De nos jours, le développement de l'électronique de puissance permet d'alimenter et de piloter une seule machine électrique tournante polyphasée réversible qui remplace avantageusement le démarreur et l'alternateur.

Dans un premier temps, cette machine, connue sous le nom d'alterno-démarreur, avait essentiellement pour but de remplir les fonctions autrefois dédiées à l'alternateur et au démarreur, et, accessoirement, de récupérer l'énergie au freinage, ou d'apporter un supplément de puissance et de couple au moteur thermique.

Dans le but d'accroître la puissance et d'améliorer le rendement de l'alterno-démarreur en augmentant sa tension de fonctionnement tout en conservant la possibilité d'utiliser des autres équipements standards, prévus pour une alimentation de 12 V à 14 V, notamment les batteries au plomb, a été développée une architecture dite "14 + X", ou "micro-hybride".

Cette architecture consiste donc en un réseau électrique de puissance reliant l'alterno-démarreur à un élément de stockage d'énergie électrique fonctionnant à une tension supérieure à 14 V, pouvant atteindre 48 V, et en un réseau électrique de service reliant tous les autres équipements. L'adaptation des niveaux de tensions entre les deux réseaux est assurée par un convertisseur continu - continu réversible.

Dans un second temps, des considérations écologiques, ont conduit à concevoir des alterno-démarreurs ayant une puissance, de l'ordre de 8 à 10 kW, suffisante pour entraîner le véhicule à faible vitesse, par exemple en environnement urbain.

De telles puissances n'ont pu être obtenues tout en conservant des machines électriques compactes qu'en portant la tension du réseau électrique de puissance à une tension, de l'ordre de 60 V, bien supérieure à la tension nominale des batteries au plomb classiques.

Par ailleurs, des réseaux de puissance à des tensions allant jusqu'à 120 V peuvent être mis en œuvre dans une architecture qui permet au véhicule d'être entraîné à pleine vitesse par le moteur électrique (architecture dite "full-hybrid" en terminologie anglaise, par comparaison à l'architecture précédente dite "mild-hybrid").

Afin de réaliser les fonctions propres aux véhicules hybrides rappelées ci-dessus, une puissance importante est fournie essentiellement par l'élément de stockage du réseau de puissance.

Pendant une phase de freinage récupératif, l'énergie restituée doit être absorbée rapidement par la batterie haute tension, et, inversement, pendant des phases d'assistance en couple, il est nécessaire que la batterie haute tension puisse fournir une puissance importante. Un tel élément de stockage doit donc présenter une très faible résistance interne pour éviter des pertes de tension pendant les phases de décharges et des surtensions pendant les phases de charge.

En même temps, il doit présenter un niveau d'énergie suffisant pour être capable de fournir l'énergie dans une phase de roulage en mode uniquement électrique (dite "ZEV" en terminologie anglaise, pour "Zero Emission Vehicle"), et il va de soi que la quantité d'énergie disponible sur une longue période est primordiale.

Mais dans l'état actuel de la technique, il n'existe pas de stockeurs d'énergie électrique présentant à la fois une forte puissance massique et une importante énergie massique. On utilise habituellement de manière non-optimale des batteries lithium-ion qui sont soumises à des contraintes sévères limitant leur fiabilité et leur durée de vie.

Dans l'article "Improvement of Drive Range, Accélération and Décélération Performance In an Electric Vehicle Propulsion System" présenté par X. Yan et ali lors du congrès PESC 99 ("30 th Annual IEEE Powers Electronics Specialists Conference", 1999, Vol. 2, pages 638 - 643), sont décrites des batteries zinc-brome optimisées pour leur énergie massique, leur durée de vie et leur faible coût associées à des ultracapacités qui fournissent les pointes de puissance.

Un convertisseur continu - continu bidirectionnel gère la charge / décharge des deux types de stockeurs en fonction des états de fonctionnement du véhicule (accélération, dépassement, freinage récupératif ...).

Ce convertisseur comprend un demi-pont à semi-conducteurs de puissance et une self reliés respectivement aux batteries ZnBr et aux ultracapacités de manière à constituer un montage survolteur/dévolteur.

La commande des semi-conducteurs du demi-pont est simple, mais dans cette architecture, ces semi-conducteurs sont soumis aux tensions présentes aux bornes des stockeurs et sur le réseau de puissance, et doivent donc commuter des puissances importantes. Le coût de ces semi-conducteurs peut alors être élevé.

### DESCRIPTION GENERALE DE L'INVENTION.

La présente invention vise à pallier cet inconvénient, et à limiter les coûts des composants d'un système d'alimentation électrique à double stockeurs d'un véhicule automobile électrique ou hybride.

Ce système, qui est destiné à être connecté à un réseau électrique de puissance du véhicule, est du type de ceux connus en soi, par exemple du document US210/133900, comprenant un premier stockeur d'énergie électrique, présentant une première énergie massique et une première puissance massique, et un second stockeur d'énergie électrique, présentant une seconde énergie massique inférieure à la première énergie massique et une seconde puissance massique supérieure à la première puissance massique. De manière habituelle, les premier et second stockeurs d'énergie électrique sont couplés électriquement par un convertisseur continu - continu bidirectionnel contrôlé en fonction des états de fonctionnement du véhicule.

Le système d'alimentation électrique à double stockeurs d'un véhicule automobile électrique ou hybride selon l'invention est remarquable en ce que le convertisseur continu - continu est, au moins en partie, flottant par rapport à une ligne de référence du réseau de puissance du véhicule et comprend une self, un condensateur, deux premières diodes de roue libre et deux premiers éléments de commutation à semi-conducteur formant une première inductance de filtrage électronique apte à un premier transfert de charges à partir du premier stockeur d'énergie électrique vers le second stockeur d'énergie électrique.

Dans un premier mode de réalisation du système d'alimentation électrique à double stockeurs d'énergie électrique d'un véhicule automobile électrique ou hybride selon l'invention, le convertisseur continu - continu comprend en outre remarquablement un premier onduleur couplé par un transformateur à un redresseur formant une première alimentation à découpage apte à un second transfert de charges à partir du condensateur vers le premier stockeur d'énergie électrique.

Dans ce premier mode de réalisation, le système d'alimentation électrique à double stockeurs d'énergie électrique d'un véhicule automobile électrique ou hybride comprend en outre avantageusement en variante un chargeur apte à être relié à un réseau électrique de distribution, ce chargeur comprenant un second onduleur formant, en étant couplé par le transformateur au redresseur, une seconde alimentation à découpage apte à charger le premier stockeur d'énergie électrique à partir du réseau électrique de distribution.

Cette seconde alimentation à découpage fonctionne de préférence en régime de commutation à tension nulle du côté du réseau de distribution électrique et en régime de commutation à courant nul du coté du premier stockeur d'énergie électrique.

Dans ce premier mode de réalisation, les premiers éléments de commutation à semi-conducteur sont préférentiellement de type IGBT.

Dans un second mode de réalisation du système d'alimentation électrique à double stockeurs d'énergie électrique d'un véhicule automobile électrique ou hybride selon l'invention, le convertisseur continu - continu comprend en outre remarquablement deux secondes diodes de roue libre et deux seconds éléments de commutation à semi-conducteur formant avec la self et le condensateur une seconde inductance de filtrage électronique apte à un second transfert de charges à partir du second stockeur d'énergie électrique vers le premier stockeur d'énergie électrique, les premiers éléments de commutation à semi-conducteur étant bloqués.

Dans ce second mode de réalisation, les premiers et seconds éléments de commutation à semi-conducteur sont avantageusement de type MOSFET, les premières et secondes diodes de roue libre étant constituées par des diodes internes de ces premiers et seconds éléments de commutation à semi-conducteur.

On tire bénéfice du fait que dans l'un et l'autre modes de réalisation du système d'alimentation électrique à double stockeurs d'énergie électrique d'un véhicule automobile électrique ou hybride selon l'invention, les premiers et seconds éléments de commutation à semi-conducteur présentent une tension de service de l'ordre d'une différence de tension maximale entre une première tension du premier stockeur d'énergie électrique et une seconde tension du second stockeur d'énergie électrique par rapport à une tension de référence de la ligne de référence du réseau de puissance.

Dans le cadre de l'invention, un véhicule automobile électrique ou hybride sera également avantageusement pourvu du système d'alimentation électrique à double stockeurs d'énergie électrique décrit ci-dessus.

Ces quelques spécifications essentielles auront rendu évidents pour l'homme de métier les avantages apportés par ce système d'alimentation électrique par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

La **Figure 1** est un schéma électrique d'un système d'alimentation électrique à double stockeurs d'énergie électrique d'un véhicule automobile électrique ou hybride connu de l'état de la technique.
La **Figure 2** est un schéma électrique d'un système d'alimentation électrique à double stockeurs d'énergie électrique d'un véhicule automobile électrique ou hybride selon l'invention dans un premier mode de réalisation préféré.
La **Figure 3** est un schéma électrique d'un système d'alimentation électrique à double stockeurs d'énergie électrique d'un véhicule automobile électrique ou hybride selon l'invention dans un variante du premier mode de réalisation préféré.
La **Figure 4** est un schéma électrique d'un système d'alimentation électrique à double stockeurs d'énergie électrique d'un véhicule automobile électrique ou hybride selon l'invention dans un second mode de réalisation préféré.
Les **Figures 5a et 5b** illustrent le principe de fonctionnement du convertisseur continu - continu du système d'alimentation électrique à double stockeurs d'énergie électrique d'un véhicule automobile électrique ou hybride montré sur la **Figure 4****.**

### DESCRIPTION DES MODES DE REALISATION PREFERES DE L'INVENTION.

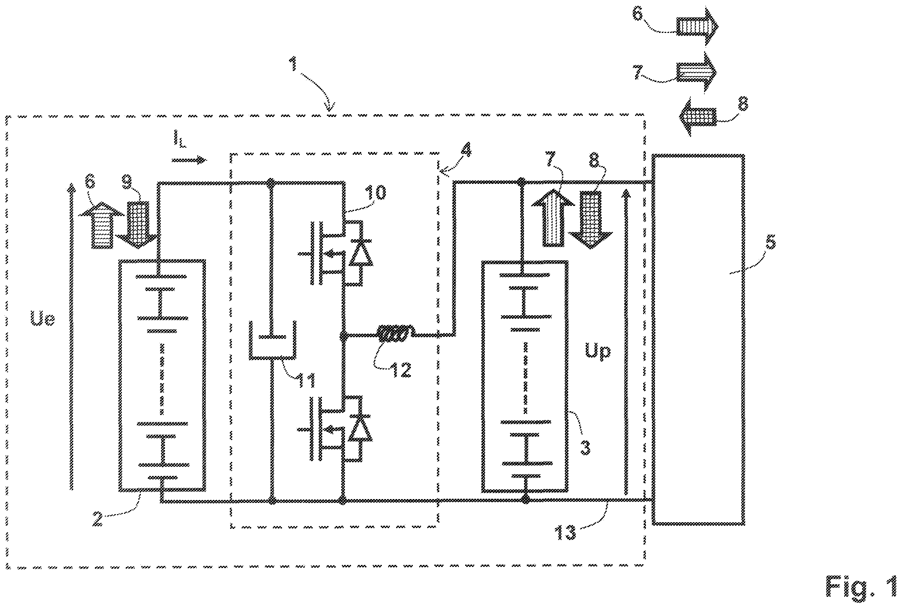

Un rappel, en liaison avec la **Figure 1****,** des caractéristiques d'un système d'alimentation électrique à double stockeurs d'énergie électrique 1 d'un véhicule automobile électrique ou hybride connu de l'état de la technique permettra de bien comprendre l'apport de l'invention.

La **Figure 1** montre schématiquement un premier stockeur d'énergie électrique 2 couplé électriquement à un second stockeur d'énergie électrique 3 par un convertisseur continu - continu bidirectionnel 4.

L'ensemble 1 est destiné à être connecté à un réseau de puissance 5 du véhicule, mais celui des premier et second stockeurs 2, 3 susceptible de fournir au réseau de puissance 5 la plus forte puissance instantanée est généralement connecté directement à ce réseau 5.

Dans l'exemple montré sur la **Figure 1****,** le premier stockeur 2 est considéré comme celui susceptible de fournir beaucoup d'énergie, mais ne disposant que d'une faible puissance.

Ce premier stockeur 2 est par exemple composé de plusieurs cellules ZnBr, telles que décrites dans l'article cité ci-dessus, ou plus couramment par des cellules Li-Ion.

Les batteries ZnBr présentent une énergie massique comprise entre 30 et 50 W.h/ kg, tandis que les batteries Li-Ion présentent une meilleure énergie massique comprise entre 75 et 200 W.h/ kg, mais sont plus onéreuses pour les capacités importantes.

On constate cependant que la puissance massique des batteries Li-Ion, comprise entre 150 et 315 W/ kg, est le plus souvent insuffisante pour les applications aux véhicules électriques ou hybrides.

En effet, une citadine électrique, une voiture compacte avec dispositif d'accroissement de l'autonomie de type "REX" (acronyme de "Range EXtender" en terminologie anglaise), une camionnette avec REX ou un utilitaire léger ont en commun le fait de disposer d'une énergie de 15 à 20 kW.h grâce à une batterie relativement petite.

Mais cette batterie est totalement incapable de fournir, ou d'absorber, une puissance de 150 kW qui intervient dans une phase d'accélération, de freinage récupératif ou de charge rapide.

Ce niveau de puissance est fourni par le second stockeur d'énergie électrique 3, le plus souvent constitué d'un ensemble d'ultracapacités de type EDLC (acronyme anglais pour "Electric Double Layer Capacitor", c'est-à-dire "capacité électrique à double couches") groupées en série et en parallèle.

L'énergie massique d'une ultracapacité est faible, comprise entre 2,5 et 15 W.h/ kg, mais sa puissance massique peut atteindre 5 kW/ kg.

Le convertisseur continu - continu bidirectionnel 4, en gérant les transferts de charges entre le premier stockeur 2 et le second stockeur 3, permet de répondre à tous les besoins du réseau de puissance 5 selon les états de fonctionnement du véhicule, comme cela est bien indiqué sur la **Figure 1** pour un véhicule électrique:
- quand le véhicule roule à vitesse constante, l'énergie électrique 6 alimentant le moteur électrique est fournie au réseau de puissance 5 à partir du premier stockeur 2 au moyen du convertisseur continu - continu 4;
- quand le véhicule est en phase d'accélération, un surcroît de puissance 7 est fourni directement au réseau de puissance 5 par le second stockeur d'énergie électrique 3;
- quand le véhicule est en phase de freinage récupératif, la puissance 8 est absorbée par le second stockeur d'énergie électrique 3 et l'énergie récupérée 9 est transférée au premier stockeur d'énergie électrique 2 au moyen du convertisseur continu - continu 4.

Ce convertisseur continu - continu 4 comprend un demi-pont à semi-conducteurs de puissance 10 en parallèle sur une capacité 11, et une inductance 12 reliés respectivement au premier stockeur 2 et au second stockeur 3 de manière à constituer un montage survolteur/ dévolteur d'un type classique.

En cours de fonctionnement, les composants électroniques 10, 11, 12, actifs et passifs, de ce convertisseur continu - continu 4 sont soumis à une première tension Ue du premier stockeur ou à une seconde tension Up du second stockeur 3.

Ces première et seconde tensions Ue, Up peuvent atteindre plusieurs centaines de volts, tandis que les intensités qui circulent peuvent atteindre plusieurs centaines d'ampères; il en résulte que les puissances commutées peuvent nécessiter la mise en œuvre de semi-conducteurs onéreux.

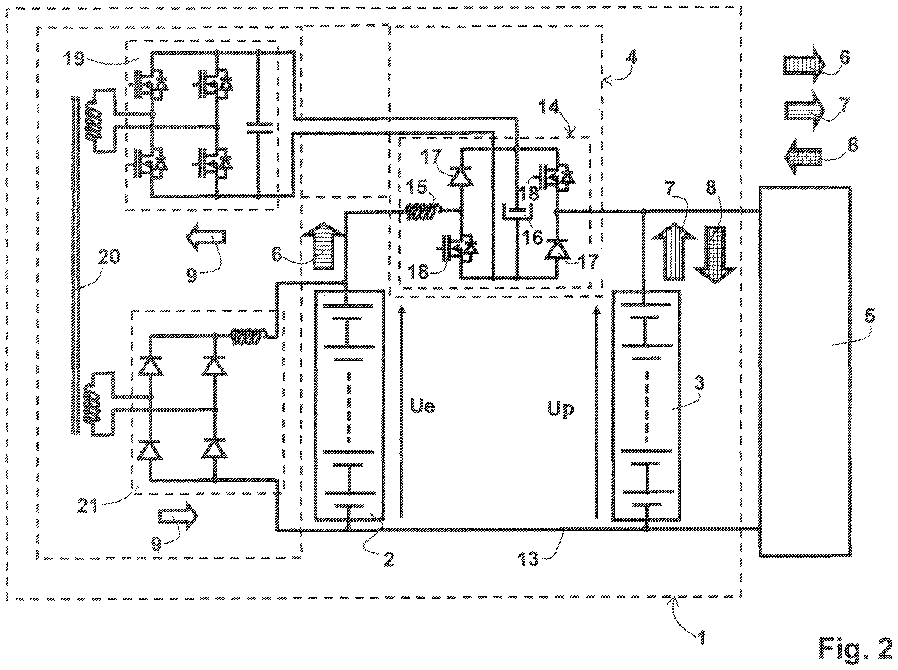

Cet inconvénient est pallié par le système d'alimentation électrique à double stockeurs selon l'invention montré sur les **Figures 2****,** **3** **et** **4****.**

Dans les différents modes de réalisation préférés représentés, le convertisseur continu - continu 4 est, au moins en partie, flottant par rapport à la masse 13.

De ce fait, les composants électroniques de la partie flottante du convertisseur continu - continu 4 ne sont plus soumis aux tensions de mode commun des premier et second stockeurs d'énergie électrique 2, 3, mais uniquement aux tensions différentielles. Leur tension de service est donc moindre et leur coût plus faible.

Dans un premier mode de réalisation préféré de l'invention montré sur la **Figure 2****,** une partie flottante 14 du convertisseur continu - continu 4 comporte une self 15, un condensateur 16, deux premières diodes de roue libre 17 et deux premiers éléments de commutation à semi-conducteur 18 formant une première inductance de filtrage électronique 14 (ou ESI, acronyme de l'expression "Electronic Smoothing Inductor" en terminologie anglaise) permettant un premier transfert de charges 6 du premier stockeur d'énergie électrique 2 au réseau de puissance 5 pour alimenter le moteur électrique du véhicule.

Une autre partie du convertisseur continu - continu 4 est constituée par un premier onduleur 19 connecté en parallèle sur le condensateur 16 de l'ESI 14. Cette autre partie 19 est rendue flottante grâce au transformateur 20 à enroulements séparés qui la couple à un redresseur 21 connecté en parallèle sur le premier stockeur d'énergie 2.

Ce premier onduleur 19 et le redresseur 21 forment une première alimentation à découpage permettant un second transfert de charges 9 à partir du condensateur 16, c'est-à-dire un transfert de l'énergie récupérée dans la phase de freinage récupératif.

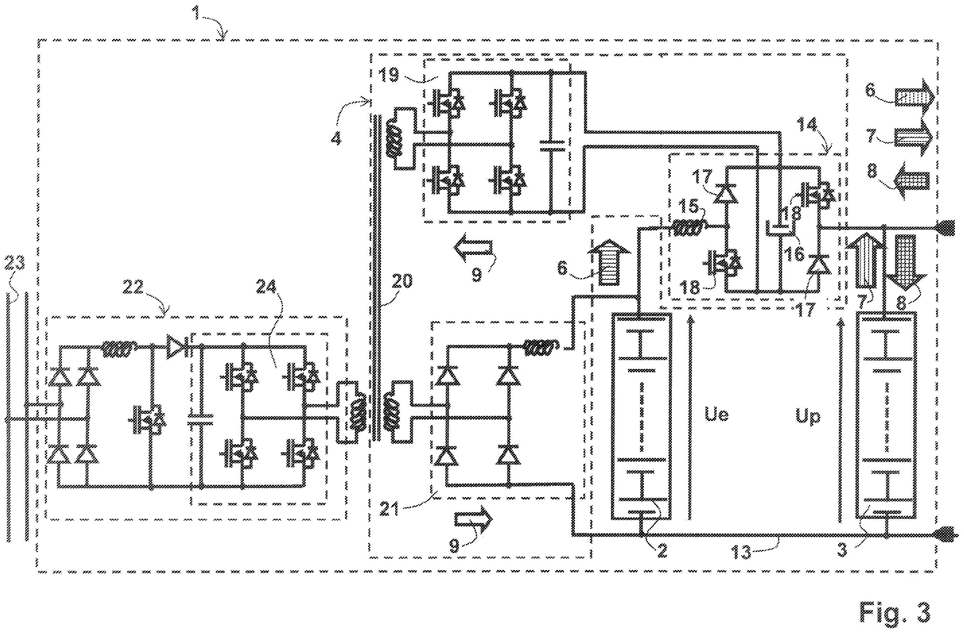

La **Figure 3** montre une variante de ce premier mode de réalisation, où le système d'alimentation électrique à double stockeurs 1 comprend en outre un chargeur 22 apte à être relié à un réseau électrique de distribution 23.

Ce chargeur 22 comprend un second onduleur 24 connecté à un enroulement supplémentaire du transformateur 20 du convertisseur continu - continu 4. Le second onduleur 24, couplé au redresseur 21 du convertisseur continu - continu 4, forme une seconde alimentation à découpage permettant de charger le premier stockeur d'énergie électrique 2 à partir du réseau électrique de distribution 23.

Cette seconde alimentation à découpage 21, 24 est entièrement statique et met en œuvre les techniques modernes de fonctionnement en régime de commutation à tension nulle (dit ZVS, acronyme de "Zero Voltage Switching" en terminologie anglaise) du côté du réseau de distribution 23 et en régime de courant nul (dit ZCS, acronyme de "Zero Current Switching" en terminologie anglaise) du côté du premier stockeur d'énergie électrique 2. Dans ce premier mode de réalisation, les premiers éléments de commutation à semi-conducteur 18 (représentés sous forme de transistors MOSFET à la Fig.3) sont de préférence de type IGBT (acronyme de "Insolated Gate Bipolar Transistor" en terminologie anglaise, c'est-à-dire "Transistor bipolaire à grille isolée). Ce type est préféré à des semi-conducteurs de type MOSFET (acronyme de "Metal Oxyde Semiconductor Field Effect Transistor" en terminologie anglaise, c'est-à-dire "Transistor à effet de champ à semi-conducteur à oxyde métallique") car il présente une capacité d'entrée plus faible que celle d'un MOSFET et qu'il n'est pas nécessaire de prévoir des diodes de roue libre supplémentaires dans cette configuration.

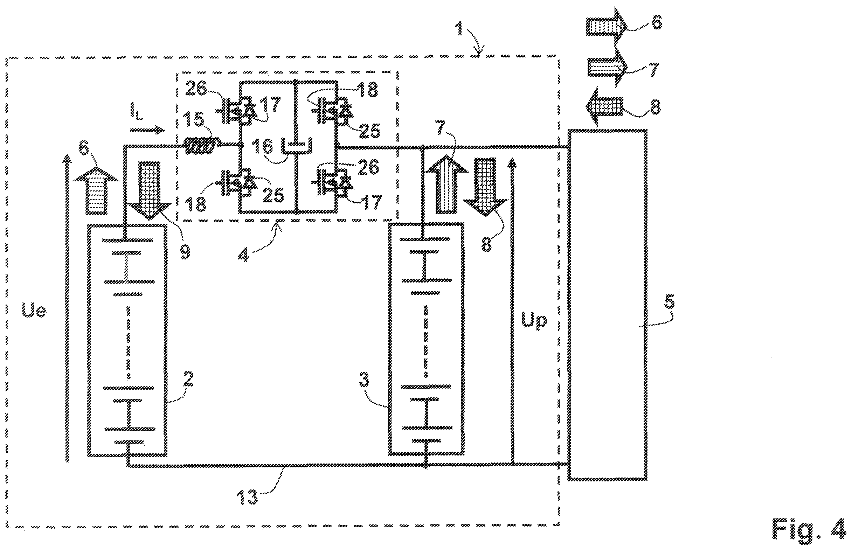

Un second mode de réalisation préféré de l'invention est montré sur la **Figure 4****.**

Dans ce second mode de réalisation, l'ensemble du convertisseur continu - continu 4 est flottant par rapport à la masse 13.

Pour ce faire, et obtenir un fonctionnement bidirectionnel, le convertisseur continu - continu 4 comprend deux secondes diodes de roue libre 25 et deux seconds éléments de commutation à semi-conducteurs 26 supplémentaires par rapport au montage des **Figures 2** **et** **3**

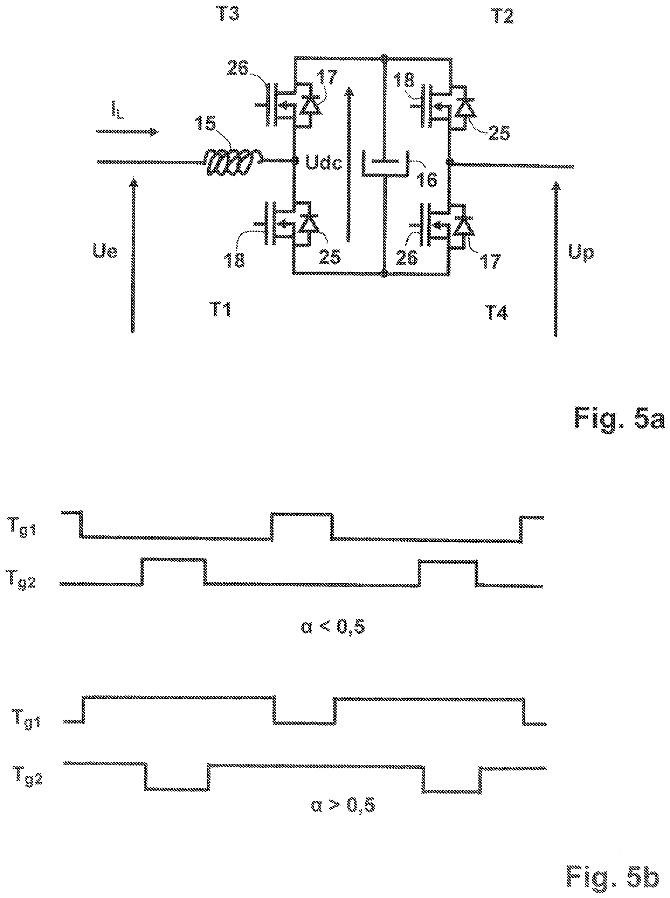

Ces composants supplémentaires 25, 26 forment avec la self 15 et le condensateur 16 une seconde inductance de filtrage électronique (ou ESI) apte à un second transfert de charges à partir du second stockeur d'énergie électrique 3 vers le premier stockeur d'énergie électrique 2, les premiers éléments de commutation à semi-conducteurs 18 étant bloqués, comme permettent de bien le comprendre la **Figure 5a** et les diagrammes de temps correspondants de la **Figure 5b** en liaison avec la **Table I** ci-après, dans laquelle:
- Ue, Up désignent respectivement les première et seconde tensions des premier et second stockeurs 2, 3 par rapport à la masse 13;
- Udc désigne une différence de potentiel aux bornes du condensateur 16, qui doit rester supérieure à la valeur absolue de la différence de tension Up - Ue entre les seconde et première tensions Up, Ue;
- I_{L} désigne l'intensité du courant entre le premier stockeur 2 et le second stockeur 3;
- T1, T2 désignent les premiers éléments de commutation à semi-conducteur 18 et T3, T4 désignent les seconds éléments de commutation à semi-conducteur 26;
- α désigne un rapport cyclique des signaux en quadrature Tg1, Tg2 commandant T1 et T2, ou T3 et T4.

**Table I**

| | **I_{L} > 0** | **I_{L} < 0** |
|---|---|---|
| | T1, T2 commutants | T1, T2 bloqués |
| | T3, T4 bloqués | T3, T4 commutants |
| **Up > Ue** | Udc décroissant | Udc croissant |
| | α > 0,5 | α < 0,5 |
| **Ue > Up** | Udc croissant | Udc décroissant |
| | α < 0,5 | α > 0,5 |

Les valeurs du rapport cyclique α des signaux en quadrature Tg1, Tg2 déterminent le sens des transferts de charges par le convertisseur continu - continu 4 en fonction de l'état de fonctionnement du véhicule:
- en phase de roulage en croisière, le premier stockeur d'énergie électrique 2 à haute énergie massique fournit l'énergie nécessaire:
   IL > 0 et Ue > Up donc α < 0,5
- en phase de freinage récupératif, l'énergie récupérée est fournie au second stockeur d'énergie électrique 3 à haute puissance massique et transférée au premier stockeur d'énergie électrique 2 à haute énergie massique:
   I_{L} < 0 et Up > Ue donc α < 0,5
- en phase d'accélération, si Up > Ue, la puissance est fournie par le second stockeur d'énergie électrique 3;
- en phase d'accélération, si Ue > Up, l'énergie est fournie par les premier et second stockeurs d'énergie électrique 2, 3:
   I_{L} > 0 et Ue > Up donc α < 0,5

Dans ce second mode de réalisation préféré de l'invention, les premiers et seconds éléments de commutation à semi-conducteur 18, 26 sont de type MOSFET de puissance, les diodes internes de ces MOSFET constituant les premières et secondes diodes de roue libre 17, 25 des ESI.

La tension de service des premiers et seconds éléments de commutation à semi-conducteur 18, 26 n'a pas besoin de satisfaire aux contraintes imposées par les hautes tensions des premier et second stockeurs 2, 3, et peut être de l'ordre de la différence de tension maximale (en valeur absolue) existant entre les première et seconde tensons Ue, Up des stockeurs 2, 3. Toutefois, on notera que les premiers et seconds éléments de commutation à semi-conducteur 18, 26 doivent être commandés par une tension continue supérieure à cette différence de tension maximale.

Comme il va de soi l'invention ne se limite pas aux seuls modes d'exécution préférentiels décrits ci-dessus.

Une description analogue pourrait porter sur des types de stockeurs d'énergie électrique 2, 3 différents de ceux cités à titre d'exemples.

Notamment, le premier stockeur d'énergie électrique 2 et le second stockeur d'énergie électrique 3 sont alternativement de même technologie, par exemple Li-Ion.

Dans ce cas, le premier stockeur d'énergie électrique 2 travaille à des premiers points de fonctionnement permettant des cycles de charge/ décharge allant de 5 à 95% de la capacité nominale, alors que le second stockeur 3 travaille en des seconds points de fonctionnement privilégiant le courant de pointe mais au détriment d'une charge réduite à 40 - 60% de la capacité nominale.

Les types des premier et second éléments de commutation à semi-conducteur 18, 26 cités ne sont pas non plus limitatifs. L'homme de métier mettra en œuvre d'autres types autant que de besoin, notamment au vu des puissances et des tensions d'utilisation requises.

L'invention embrasse donc toutes les variantes possibles de réalisation dans la mesure où ces variantes restent dans le cadre défini par les revendications ci-après.

## Revendications

1. Système d'alimentation électrique à double stockeurs d'énergie électrique (1) d'un véhicule automobile électrique ou hybride destiné à être connecté à un réseau de puissance (5) dudit véhicule du type de ceux comprenant un premier stockeur d'énergie électrique (2), présentant une première énergie massique et une première puissance massique, et un second stockeur d'énergie électrique (3), présentant une seconde énergie massique inférieure à ladite première énergie massique et une seconde puissance massique supérieure à ladite première puissance massique, lesdits premier et second stockeurs d'énergie électrique (2, 3) étant couplés électriquement par un convertisseur continu - continu bidirectionnel (4) contrôlé en fonction des états de fonctionnement dudit véhicule, **caractérisé en ce que** ledit convertisseur continu - continu (4) est, au moins en partie, flottant par rapport à une ligne de référence (13) dudit réseau de puissance (5) et comprend une self (15), un condensateur (16), deux premières diodes de roue libre (17) et deux premiers éléments de commutation à semi-conducteur (18) formant une première inductance de filtrage électronique (14) apte à un premier transfert de charges (6) à partir dudit premier stockeur d'énergie électrique (2) vers ledit second stockeur d'énergie électrique (3).

2. Système d'alimentation électrique à double stockeurs d'énergie électrique (1) d'un véhicule automobile électrique ou hybride selon la revendication 1, **caractérisé en ce que** ledit convertisseur continu - continu (4) comprend en outre un premier onduleur (19) couplé par un transformateur (20) à un redresseur (21) formant une première alimentation à découpage (19, 20, 21) apte à un second transfert de charges (9) à partir dudit condensateur (16) vers ledit premier stockeur d'énergie électrique (2).

3. Système d'alimentation électrique à double stockeurs d'énergie électrique (1) d'un véhicule automobile électrique ou hybride selon la revendication 2, **caractérisé en ce qu'**il comprend en outre un chargeur (22) apte à être relié à un réseau électrique de distribution (23), ledit chargeur (22) comprenant un second onduleur (24) formant, en étant couplé par ledit transformateur (20) audit redresseur (21), une seconde alimentation à découpage (20, 21, 24) apte à charger ledit premier stockeur d'énergie électrique (2) à partir dudit réseau électrique de distribution (23).

4. Système d'alimentation électrique à double stockeurs d'énergie électrique (1) d'un véhicule automobile électrique ou hybride selon la revendication 3, **caractérisé en ce que** ladite seconde alimentation à découpage (20, 21, 24) fonctionne en régime de commutation à tension nulle du côté dudit réseau de distribution électrique (23) et en régime de commutation à courant nul du coté dudit premier stockeur d'énergie électrique (2).

5. Système d'alimentation électrique à double stockeurs d'énergie électrique (1) d'un véhicule automobile électrique ou hybride selon l'une quelconque des revendications 1 à 4 précédentes, **caractérisé en ce que** lesdits premiers éléments de commutation à semi-conducteur (18) sont de type IGBT.

6. Système d'alimentation électrique à double stockeurs d'énergie électrique (1) d'un véhicule automobile électrique ou hybride selon la revendication 1, **caractérisé en ce que** ledit convertisseur continu - continu (4) comprend en outre deux secondes diodes de roue libre (25) et deux seconds éléments de commutation à semi-conducteur (26) formant avec ladite self (15) et ledit condensateur (16) une seconde inductance de filtrage électronique (15, 16, 25, 26) apte à un second transfert de charges à partir dudit second stockeur d'énergie électrique (3) vers ledit premier stockeur d'énergie électrique (2), lesdits premiers éléments de commutation à semi-conducteur (18) étant bloqués.

7. Système d'alimentation électrique à double stockeurs d'énergie électrique (1) d'un véhicule automobile électrique ou hybride selon la revendication 6, **caractérisé en ce que** lesdits premiers et seconds éléments de commutation à semi-conducteurs (18, 26) sont de type MOSFET, lesdites premières et secondes diodes de roue libre (17, 25) étant constituées par des diodes internes desdits premiers et seconds éléments de commutation à semi-conducteur (18, 26).

8. Système d'alimentation électrique à double stockeurs d'énergie électrique (1) d'un véhicule automobile électrique ou hybride selon l'une quelconque des revendications 1 à 7 précédentes, **caractérisé en ce que** lesdits premiers et seconds éléments de commutation à semi-conducteur (18, 26) présentent une tension de service de l'ordre d'une différence de tension maximale entre une première tension (Ue) dudit premier stockeur d'énergie électrique (2) et une seconde tension (Up) dudit second stockeur d'énergie électrique (3) par rapport à une tension de référence de ladite ligne de référence (13).

9. Véhicule automobile électrique ou hybride comprenant un système d'alimentation électrique à double stockeurs d'énergie électrique (1) selon l'une quelconque des revendications 1 à 8 précédentes.

## Patentansprüche

1. Stromversorgungssystem mit Doppelspeichern elektrischer Energie (1) eines Elektro- oder Hybridkraftfahrzeugs, das dazu bestimmt ist, mit einem Leistungsnetz (5) des Fahrzeugs verbunden zu werden, von der Art, die einen ersten Speicher elektrischer Energie (2), der eine erste spezifische Energie und eine erste spezifische Leistung aufweist, und einen zweiten Speicher elektrischer Energie (3) enthält, der eine zweite spezifische Energie geringer als die erste spezifische Energie und eine zweite spezifische Leistung größer als die erste spezifische Leistung aufweist, wobei die ersten und zweiten Speicher elektrischer Energie (2, 3) durch einen bidirektionalen Gleichstrom-Gleichstrom-Wandler (4) elektrisch gekoppelt werden, der abhängig von den Betriebszuständen des Fahrzeugs gesteuert wird, **dadurch gekennzeichnet, dass** der Gleichstrom-Gleichstrom-Wandler (4) zumindest zum Teil bezüglich einer Bezugsleitung (13) des Leistungsnetzes (5) schwebend ist und eine Drosselspule (15), einen Kondensator (16), zwei erste Freilaufdioden (17) und zwei erste Halbleiter-Schaltelemente (18) enthält, die eine erste elektronische Filterinduktivität (14) bilden, die für eine erste Ladungsübertragung (6) ausgehend vom ersten Speicher elektrischer Energie (2) zum zweiten Speicher elektrischer Energie (3) geeignet ist.

2. Stromversorgungssystem mit Doppelspeichern elektrischer Energie (1) eines Elektro- oder Hybridkraftfahrzeugs nach Anspruch 1, **dadurch gekennzeichnet, dass** der Gleichstrom-Gleichstrom-Wandler (4) außerdem einen ersten Wechselrichter (19) enthält, der durch einen Transformator (20) mit einem Gleichrichter (21) gekoppelt ist, der ein erstes Schaltnetzteil (19, 20, 21) bildet, das für eine zweite Ladungsübertragung (9) ausgehend vom Kondensator (16) zum ersten Speicher elektrischer Energie (2) geeignet ist.

3. Stromversorgungssystem mit Doppelspeichern elektrischer Energie (1) eines Elektro- oder Hybridkraftfahrzeugs nach Anspruch 2, **dadurch gekennzeichnet, dass** es außerdem ein Ladegerät (22) enthält, das mit einem elektrischen Verteilernetz (23) verbunden werden kann, wobei das Ladegerät (22) einen zweiten Wechselrichter (24) enthält, der, indem er durch den Transformator (20) mit dem Gleichrichter (21) gekoppelt ist, ein zweites Schaltnetzteil (20, 21, 24) bildet, das den ersten Speicher elektrischer Energie (2) ausgehend vom elektrischen Verteilernetz (23) laden kann.

4. Stromversorgungssystem mit Doppelspeichern elektrischer Energie (1) eines Elektro- oder Hybridkraftfahrzeugs nach Anspruch 3, **dadurch gekennzeichnet, dass** das zweite Schaltnetzteil (20, 21, 24) im Nullspannungsschaltbetrieb auf der Seite des elektrischen Verteilernetzes (23) und im Nullstromschaltbetrieb auf der Seite des ersten Speichers elektrischer Energie (2) arbeitet.

5. Stromversorgungssystem mit Doppelspeichern elektrischer Energie (1) eines Elektro- oder Hybridkraftfahrzeugs nach einem der vorhergehenden Ansprüche 1 bis 4, **dadurch gekennzeichnet, dass** die ersten Halbleiter-Schaltelemente (18) vom Typ IGBT sind.

6. Stromversorgungssystem mit Doppelspeichern elektrischer Energie (1) eines Elektro- oder Hybridkraftfahrzeugs nach Anspruch 1, **dadurch gekennzeichnet, dass** der Gleichstrom-Gleichstrom-Wandler (4) außerdem zwei zweite Freilaufdioden (25) und zwei zweite Halbleiter-Schaltelemente (26) enthält, die mit der Drosselspule (15) und dem Kondensator (16) eine zweite elektronische Filterinduktivität (15, 16, 25, 26) bilden, die für einen zweiten Ladungstransfer ausgehend vom zweiten Speicher elektrischer Energie (3) zum ersten Speicher elektrischer Energie (2) geeignet ist, wobei die ersten Halbleiter-Schaltelemente (18) blockiert sind.

7. Stromversorgungssystem mit Doppelspeichern elektrischer Energie (1) eines Elektro- oder Hybridkraftfahrzeugs nach Anspruch 6, **dadurch gekennzeichnet, dass** die ersten und zweiten Halbleiter-Schaltelemente (18, 26) vom Typ MOSFET sind, wobei die ersten und zweiten Freilaufdioden (17, 25) aus innere Dioden der ersten und zweiten Halbleiter-Schaltelemente (18, 26) bestehen.

8. Stromversorgungssystem mit Doppelspeichern elektrischer Energie (1) eines Elektro- oder Hybridkraftfahrzeugs nach einem der vorhergehenden Ansprüche 1 bis 7, **dadurch gekennzeichnet, dass** die ersten und zweiten Halbleiter-Schaltelemente (18, 26) eine Betriebsspannung in der Größenordnung einer maximalen Spannungsdifferenz zwischen einer ersten Spannung (Ue) des ersten Speichers elektrischer Energie (2) und einer zweiten Spannung (Up) des zweiten Speichers elektrischer Energie (3) bezüglich einer Bezugsspannung der Bezugsleitung (13) aufweisen.

9. Elektro- oder Hybrid-Kraftfahrzeug, das ein Stromversorgungssystem mit Doppelspeichern elektrischer Energie (1) nach einem der vorhergehenden Ansprüche 1 bis 8 enthält.

## Claims

1. Dual electrical energy store electric power supply system (1) for an electric or hybrid motor vehicle, intended to be connected to a power network (5) of said vehicle, of the type comprising a first electrical energy store (2) having a first energy-to-weight ratio and a first power-to-weight ratio and a second electrical energy store (3) having a second energy-to-weight ratio less than said first energy-to-weight ratio and a second power-to-weight ratio greater than said first power-to-weight ratio, said first and second electrical energy stores (2, 3) being electrically coupled by a bidirectional DC-to-DC converter (4) that is controlled on the basis of the operating states of said vehicle, **characterized in that** said DC-to-DC converter (4) is at least partly floating with respect to a reference line (13) of said power network (5) and comprises a self-inductor (15), a capacitor (16), two first freewheeling diodes (17) and two first semiconductor switching elements (18) forming a first electronic filtering inductor (14) suitable for a first charge transfer (6) from said first electrical energy store (2) to said second electrical energy store (3).

2. Dual electrical energy store electric power supply system (1) for an electric or hybrid motor vehicle according to Claim 1, **characterized in that** said DC-to-DC converter (4) furthermore comprises a first inverter (19) coupled via a transformer (20) to a rectifier (21) forming a first switched-mode power supply (19, 20, 21) suitable for a second charge transfer (9) from said capacitor (16) to said first electrical energy store (2).

3. Dual electrical energy store electric power supply system (1) for an electric or hybrid motor vehicle according to Claim 2, **characterized in that** it furthermore comprises a charger (22) able to be connected to an electricity supply grid (23), said charger (22) comprising a second inverter (24) forming, by being coupled via said transformer (20) to said rectifier (21), a second switched-mode power supply (20, 21, 24) able to charge said first electrical energy store (2) from said electricity supply grid (23).

4. Dual electrical energy store electric power supply system (1) for an electric or hybrid motor vehicle according to Claim 3, **characterized in that** said second switched-mode power supply (20, 21, 24) operates in zero-voltage switching mode on the side of said electricity supply grid (23) and in zero-current switching mode on the side of said first electrical energy store (2).

5. Dual electrical energy store electric power supply system (1) for an electric or hybrid motor vehicle according to any one of preceding Claims 1 to 4, **characterized in that** said first semiconductor switching elements (18) are of IGBT type.

6. Dual electrical energy store electric power supply system (1) for an electric or hybrid motor vehicle according to Claim 1, **characterized in that** said DC-to-DC converter (4) furthermore comprises two second freewheeling diodes (25) and two second semiconductor switching elements (26) forming, with said self-inductor (15) and said capacitor (16), a second electronic filtering inductor (15, 16, 25, 26) suitable for a second charge transfer from said second electrical energy store (3) to said first electrical energy store (2), said first semiconductor switching elements (18) being in the off state.

7. Dual electrical energy store electric power supply system (1) for an electric or hybrid motor vehicle according to Claim 6, **characterized in that** said first and second semiconductor switching elements (18, 26) are of MOSFET type, said first and second freewheeling diodes (17, 25) being formed by internal diodes of said first and second semiconductor switching elements (18, 26).

8. Dual electrical energy store electric power supply system (1) for an electric or hybrid motor vehicle according to any one of preceding Claims 1 to 7, **characterized in that** said first and second semiconductor switching elements (18, 26) have a service voltage of the order of a maximum voltage difference between a first voltage (Ue) of said first electrical energy store (2) and a second voltage (Up) of said second electrical energy store (3) with respect to a reference voltage of said reference line (13).

9. Electric or hybrid motor vehicle comprising a dual electrical energy store electric power supply system (1) according to any one of preceding Claims 1 to 8.
